# EUROPEAN PATENT SPECIFICATION

(11) **EP 1 705 648 B1**
(45) Date of publication and mention of the grant of the patent: **10.12.2008**
(21) Application number: 06005962.3
(22) Date of filing: 23.03.2006
(51) Int. Cl.: G11B 23/40, G11B 7/125, G11B 7/00

(54) **Focus servo control method in optical disc device**
Verfahren zur Fokusservosteuerung für eine optische Plattenvorrichtung
Procédé de servocommande de la focalisation dans un dispositif de disque optique

(30) Priority: 23.03.2005 KR 2005024135
(43) Date of publication of application: 27.09.2006
(73) Proprietor: Hitachi-LG Data Storage Korea Inc., Seoul 150-010 (KR)
(72) Inventor: Bahng, Keuk Young, Osan-si Kyunggi-Do 447-717 (KR)
(74) Representative: TER MEER - STEINMEISTER & PARTNER GbR

(56) References cited:
- EP-A- 0 532 997
- EP-A- 1 553 591
- WO-A2-03/012995
- US-A- 4 497 049
- US-A1- 2003 179 674
- US-A1- 2003 179 679
- US-A1- 2005 057 639
- US-A1- 2005 058 043

## Description

### BACKGROUND OF THE INVENTION

### 1. Field of the Invention

The invention relates to a focus servo control method in an optical disc device, and, more particularly, to a method for performing focus servo control while compensating for variations present on an optical disc.

### 2. Background of the Related Art

Optical discs have been developed recently which allow data to be recorded on a data surface of the disc, and a label with a desired design to be printed on the opposite , or non-data, surface of the disk. The surface of the disc on which a label is printed is referred to as the label surface of the disc. Labels are typically transferred onto the label surface of the disc using a laser etching technology commonly referred to as LightScribe, in which a laser burns or etches an image onto a specially prepared, non-data side of an optical disc.

A recording layer and a reflective layer are formed on the data surface of a recordable optical disc. When an optical pickup of an optical disc device radiates a laser beam onto the data surface, the laser beam is reflected by the reflective layer and is then incident on a photo-detector (PD) of the optical pickup. Focus and tracking error signals can be produced using signals output from divided cells of the photo-detector.

When reproducing data from or recording data to a disc, the optical disc device performs a focus servo operation which moves an objective lens of the optical pickup up and down, and a tracking servo operation which moves the objective lens in a radial direction so as to minimize the levels of focus and tracking error signals generated based on the signal reflected from the data surface of the disc. Servo control on the data surface of the disc based on the feedback error signals is referred to as feedback servo control.

However, the label surface of the disc preferably has no reflective layer, and is preferably rough compared to the data surface. Thus, the focus error signal required to perform feedback focus servo control cannot be generated, and feedback focus servo control cannot be performed for the label surface of this type of disc. Thus, there is no choice but to perform feed-forward focus servo control.

However, feed-forward focus servo control cannot compensate for any surface vibration components or unevenness in the optical disc, particularly on the label surface of the optical disc. This inability to compensate causes a fatal error in the label printing operation, and a failure to properly print a label with a desired image or design on the disc

US 2005/0058043 A1 describes an optical disk drive modified for speed and orientation tracking. Herein, an optical disk is configured for application of an image to a label side of the disk. The labeling process can include reading features, which provide information on disk orientation, and further provide information on disk speed and disk angular orientation. The features are defined to allow observation while applying an image to the label side of the disk, wherein the features are on the label side of the disk, could be however also defined on the data side of the disk. The disk angular orientation features of the optical disk include a larger feature and smaller features separated by flat, light-reflective areas of varying size. Because the pattern is irregular, it is possible to determine the angular orientation of the disk as it turns within an optical disk drive. An optical disk drive comprises an encoder, which is able to detect the disk speed features and/or disk angular orientation features, and to determine on the basis of the detection of these features, if the disk is orientated properly in the optical disk drive, or whether the user should be ask to flip the disk over.

US 2003/0179674 A1 describes a method of identifying optical disc properties from information read from a label side of an optical disc. Herein, a method comprising detecting of indicia and reading information from indicia is described. Herein, the step of reading information from the indicia could include identifying properties of either the label side of the optical disc, the data side of the optical disc, or both. For instance, the type of optical disk, including the type of the label side of the optical disc, may be identified, so that optimal writing to the label side of the optical disc can occur. Indicia are located on the inside border of an optical disc. The indicia is a one-dimensional bar code, but other types of indicia may also be used. In a reading process, a laser emits a signal, which is reflected by the indicia and the information encoded in the indicia could be read, wherein different bar codes patterns may be used to encode different types of information within the indicia.

US 2005/0057639 A1 describes an optical disc drive focusing apparatus. Herein, various locations on the label region of an optical disc are shown, on which focal measurements could be made. By means of these focal measurements, a look-up table is generated. Using the look-up table having actuator voltage input information associated with a number of locations on the disc, the optics may be kept in focus while applying an image to a surface of an optical disc. Focal measurements may be made at various radial distances within the optical disc. For example, measurements yielding voltage levels required to cause an actuator to focus the optics may be made at an inner radial location, an intermediate radial location, and an outer radial location. During a labeling process, the data profile of the voltage data look-up table is continuously referred to for a signal for application to the actuator to move the optics into focus for each location on the optical disc.

US 4,497,049 A describes a system for detecting the operative face of a disc carrying data on one face only. A disc 10 introduced into a turn table apparatus in such a way that data can be detected by a laser beam, an electronic control circuit positions the lens and the detection of the recorded data by the laser beam is made possible. This produces a change in the output voltage level representing a data signal from the control circuit. When the unrecorded face of the disc is placed opposite the laser beam, the control circuit cannot focus the laser beam for the detection of data and, therefore, cannot deliver a signal of the required level for processing data by the connected processor circuits and produces a no-data signal.

EP 0 532 997 A1 describes a method and an apparatus for selecting information on a data storage medium. Herein, a timing ring printed on a label of a compact disk includes dark timing marks and light timing marks which correspond to an associated region and are used for sampling. At the beginning of the timing ring a dark index mark and a light index mark are used to indicate the beginning of the regions and to synchronize the sampling system. A variety of patterns and placements could be used with the timing ring including a saw teeth pattern. Further it could contain a media identification information to use a label to encode information or provide a key that is required in order for a disk to play.

WO 03/012995 A2 describes a pulse peak and/or trough detector. Herein, a peak detector comprises a buffer amplifier, from which a clocking pulse output is input to an enable port of a first count-up counter. An associated edge detector detects a leading edge of a pulse of the clocking pulse and the counter begins counting until a trailing edge of the pulse is detected when the counter stops counting. The resultant count thus represents the duration of the pulse. Further, a center point of the pulse is determined, when a divider divides a pulse duration to produce a timing pulse representative of a mid-point or peak of the signal pulse.

### SUMMARY OF THE INVENTION

The invention is defined by the appended claims.

An object of the invention is to solve at least the above problems and/or disadvantages and to provide at least the advantages described hereinafter.

An object of the present invention to provide a method for properly performing a focus servo operation for a label surface of a LightScribe disc.

It is another object of the present invention to provide a focus servo control method in which optimal focus points are detected for compensating surface vibrations of a LightScribe disc when printing a label on a label surface of the LightScribe disc, and focus servo control is performed while compensating for the surface vibrations based on the detected optimal focus points.

In accordance with one aspect of the present invention as embodiment described herein, a focus servo control method for an optical disc deviceincludes performing focus servo control based on focus control information detected and stored for each of a plurality of radially divided areas on one surface of the optical disc, the plurality of radially divided areas being arranged along a circumferential direction of the optical disc, when recording data on the surface of the optical disc.

In certain embodiments, wherein the surface of the optical disc is a label surface of the optical disc on which a label can be printed, and wherein the focus servo control is performed in a feed-forward fashion.

In certain embodiments, the optical disc is divided radially into 20 areas, the focus control information of each of the plurality of radially divided areas includes a driving voltage or an offset voltage of a focus actuator, and is detected at an innermost part of the optical disc, and the focus control information is stored while being classified according to the areas.

Preferably, performing the focus servo control includes the steps of confirming a current area in the circumferential direction, and driving the focus actuator based on the focus control information of the confirmed current area.

Preferably, the focus servo control method also includes suspending data recording when moving outwardly by a predetermined distance while performing the data recording on the surface of the optical disc, detecting and storing focus control information of each of the plurality of radially divided areas at a position where the data recording is suspended, and performing the focus servo control based on the stored focus control information of each of the plurality of radially divided areas while continuing the data recording.

Preferably, detecting and storing focus control information includes detecting an RF signal by swinging a focus actuator in each of the plurality of radially divided areas, and obtaining focus control information corresponding to a center point of the detected RF signal, including removing a high frequency component from the detected RF signal and slicing the detected RF signal into specific reference-level pulses, obtaining respective center points of the sliced pulses, and calculating voltages for driving the focus actuator, the voltages corresponding respectively to the central points.

In accordance with another aspect of the present invention as embodied and broadly described herein, a focus servo control method for an optical disc device includes swinging a focus actuator and detecting an RF signal in each of a plurality of radially divided areas on one surface of the optical disc, the plurality of radially divided areas being arranged along a circumferential direction of the optical disc, and obtaining focus control information corresponding to a center point of the detected RF signal.

In certain embodiments, obtaining focus control information includes removing a high frequency component from the detected RF signal and slicing the detected RF signal into specific reference-level pulses; obtaining respective center points of the sliced pulses; and calculating voltages for driving the focus actuator, the voltages corresponding respectively to the central points, and storing the obtained focus control information of the plurality of radially divided areas while classifying the obtained focus control information according to the areas, wherein the focus control information includes a driving voltage or an offset voltage of the focus actuator.

In accordance with another aspect of the invention, a method of printing on a LightScribe disc may include determining whether a recordable medium is a LightScribe disc based on a first pattern corresponding to spokes provided near an inner circumference of the recordable medium using a spoke detector, determining whether a surface facing an optical pickup device corresponds to a data surface or a label surface based on whether reflection of optical light occurs on the surface or within the LightScribe disc, detecting a second pattern corresponding to an index mark, synchronizing with a spoke corresponding to position "0", the spokes providing location information of an index mark, a saw teeth area, a media ID area, and controlling a speed of rotation of the LightScribe disc, detecting media ID on the Lightscribe disc, and printing on the label surface of the LightScribe disc, wherein the label surface is divided radially into a plurality of areas, and a first focus point for the optical pickup device is determined for each of the plurality of areas, and the first focus point is used in its corresponding area of the label surface during printing.

In accordance with another aspect of the invention, a method of printing a label on recordable medium including a data surface configured to receive and store data on a first side thereof, and a label surface configured to receive a label printed thereon on a second side opposite the first side, may include reading a first pattern from the recordable medium to determine if the recordable medium includes both a data surface on a first side thereof and a label surface on a second side opposite the first side thereof, wherein the first pattern is read by a spoke detector and comprises a plurality of spokes provided proximate an inner circumference of a recordable medium, determining if a surface of the recordable medium facing an optical pickup device corresponds to the data surface or the label surface of the recordable medium based on a reflection of optical light from the surface of the recordable medium facing the optical pickup, synchronizing operation of the optical pickup device with a reference position delineated by the first pattern if it is determined that the surface of the recordable medium facing the optical pickup device is the label surface, dividing the label surface into a plurality of radial areas, determining a plurality of first optimum focus points each corresponding to a respective area of the plurality of areas, and performing a label printing operation to print an image on the label surface of the recordable medium based on the plurality of first optimum focus points.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a schematic illustration of an exemplary optical disc device to which a focus servo control method in accordance with an embodiment of the invention may be applied;

Fig. 2 is a schematic illustration of an exemplary actuator used with the optical pickup shown in Fig. 1;

Fig. 3 is a top view of a label surface of an optical disc as shown in Fig. 1;

Fig. 4 illustrates a control feature zone and an index mark pattern of an optical disc as shown in Fig. 3;

Fig. 5 illustrates a Control Feature Outer Ring (CFOR) area of the control feature zone of an optical disc as shown in Fig. 3;

Fig. 6 is a flow chart of a focus servo control method for an optical disc device, in accordance with an embodiment of the invention;

Fig. 7 is a top view of a label surface of an optical disc which is radially divided into a number of areas , in accordance with an embodiment of the invention;

Fig. 8 illustrates a procedure for detecting center points of an RF signal, in accordance with an embodiment of the invention; and

Fig. 9 is a table of focus control information managed in accordance with an embodiment of the invention.

### BEST MODE OR DETAILED DESCRIPTION

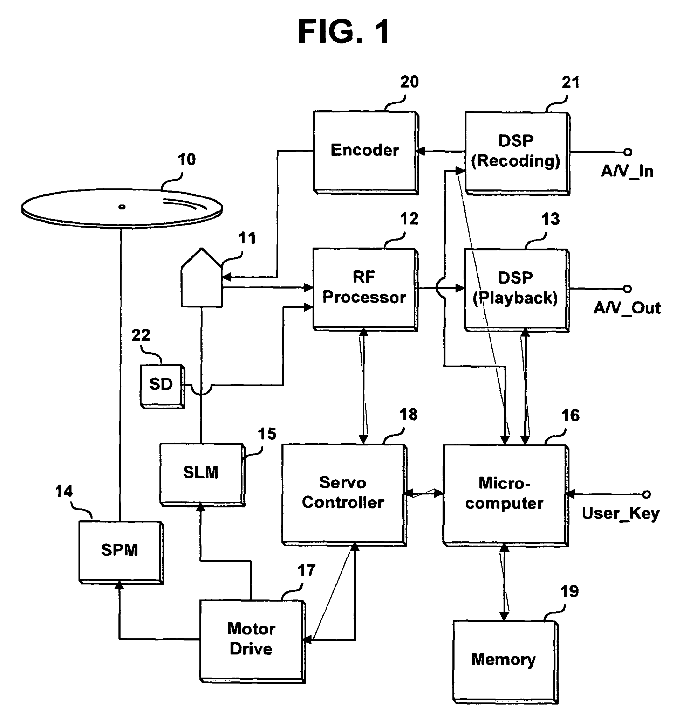

The focus servo control method in accordance with embodiments invention may be applied to various types of optical disc devices including, but not limited to CD or DVD recorders configured as shown, for example, in Fig. 1. The focus servo control method in accordance with embodiments of the invention is particularly useful for an optical disc device that can print a label on a non-data surface, such as, for example, a label surface of an optical disc such as the LightScribe disc discussed above. A LightScribe disc has been referred to simply for ease of discussion. However, it can be appreciated that the invention may be applied to any such disc which includes a surface on which a label may be printed, and, more particularly, to any such disc which preferably includes a data surface and a non-data surface which has been specially prepared for laser printing or etching.

Fig. 1 is a block diagram of an exemplary optical disc device in which the focus servo control method in accordance with embodiments of the invention may be implemented. As shown in Fig. 1, the optical disc device may include an optical disc 10, an optical pickup 11, an RF processor 12, a playback digital signal processor 13, a spindle motor 14 which rotates the optical disc 10, a sled motor 15 which moves the optical pickup 11 in a radial direction of the disc 10, a microcomputer 16, a motor drive 17, a servo controller 18, a memory 19, an encoder 20, and a recording digital signal processor 21.

An optical disc device capable of printing labels on a label surface thereof further includes a spoke detector 22 which detects spokes in a speed control features area provided on the disc 10. Based on a signal output by the spoke detector 22, the optical disc device capable of printing labels determines whether or not a disc 10 which includes a label surface, such as, for example, a LightScribe disc, has been inserted into the optical disc device, and if so, controls the rotational speed of the disc,

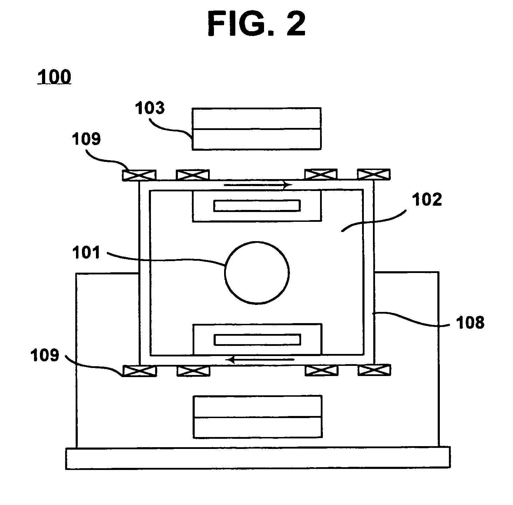

Figure 2 illustrates an actuator 100 for the optical pickup 111, in which an object lens 101 is centrally attached to a lens holder 102, a focusing coil 108 is wound around the lens holder 102, and a tracking coil 109 is attached to an upper surface of the focusing coil 108, with the focusing and tracking coils 108 and 109 facing a set of magnets 103. Electromagnetic forces generated by the magnets 103 in response to driving voltages cause the focusing coil 108 to provide for upward and downward, or vertical, movement of the object lens 101 within the lens holder 102, and cause the tracking coil 109 to provide for tracking, or horizontal, movement of the object lens 101 within the lens holder.

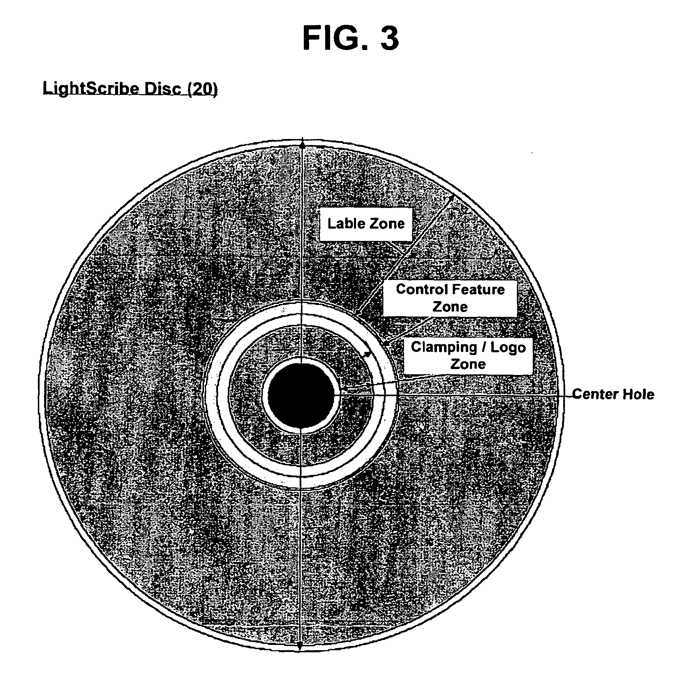

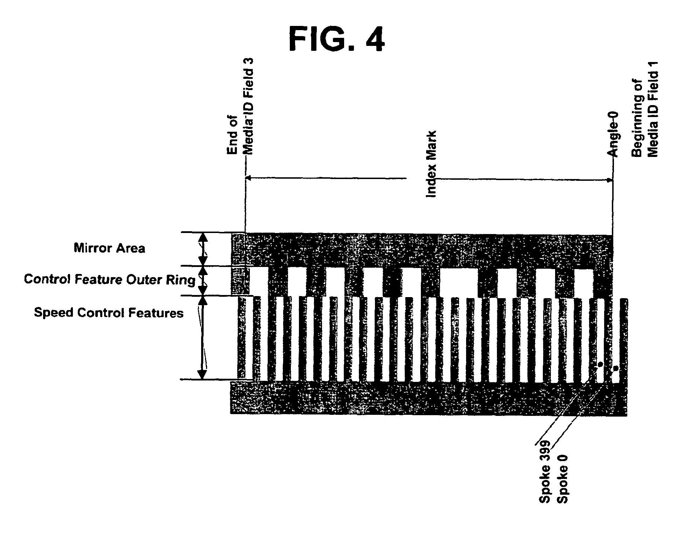

An exemplary label surface of a disc is as shown in Fig. 3 and a layout of a control feature zone and an index mark pattern on the label surface of the disc are shown in Fig. 4. The control feature zone includes a speed control features area, a Control Feature Outer Ring (CFOR) area, and a mirror area. The index mark recorded in the CFOR area is provided to make it easy to locate the CFOR area and to establish a first spoke (Spoke 0)which starts at the end of the index mark and provides a reference position in the circumferential direction of the disc.

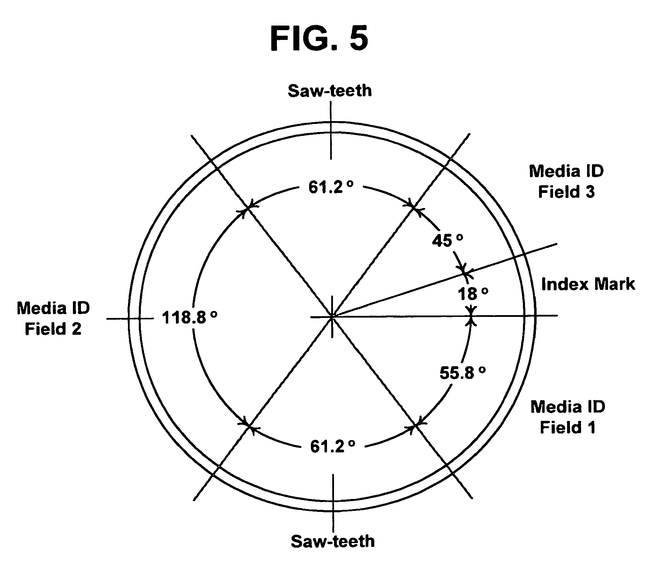

Fig. 5 shows the Control Feature Outer Ring (CFOR) area in more detail. The CFOR area is divided into an index mark field, saw-teeth fields, and media ID fields (Media ID Field 1, 2, 3). It is noted that a wobble land/groove, in which Absolute Time In Pre-groove (ATIP) information indicating a current position is recorded, is not formed on the label surface of the disc. Thus, it is not possible to apply feedback tracking servo control based on error signals, nor to gain random access to a desired position on the label surface of the disc in the manner typically employed on the data surface of the disc.

Rather, it is possible to record a label on the label surface of the disc sequentially, from an inner to an outer circular section based on feed-forward tracking servo control. Since no focus error signal is generated y the label surface of the disc, there is no choice but to perform feed-forward focus servo control on the label surface, which cannot compensate for surface vibration components or unevenness present on the disc as described above.

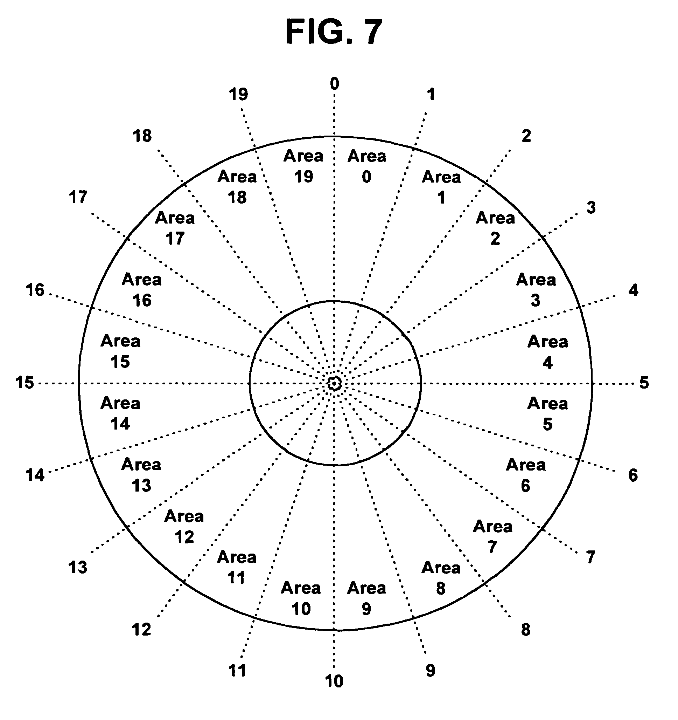

In the focus servo control method in accordance with embodiments of the invention, the label surface of the optical disc is divided radially into a predetermined number of areas arranged in a circumferential direction about the center of the disc. For exemplary purposes, the disc shown in Fig. 7 has been divided into 20 radial areas. However, it can be appreciated that other numbers of radial areas may also be appropriate. Respective optimal focus points of the radially divided areas are detected and stored, and a feed-forward focus servo operation is performed based on the stored optimal focus points.

The label surface of the optical disc is also divided circumferentially into a predetermined number of areas arranged in the radial direction. For exemplary purposes, the disc has been divided into 32 circumferential areas (32 by 32 tracks). However, it can be appreciated that other numbers or circumferential areas may also be appropriate. For each of the circumferentially divided areas, the above procedure may be performed in which the label surface is divided radially into a predetermined number of areas, respective optimal focus points of the radially divided areas are detected, and the focus servo operation is performed using the detected optimal focus points. Similarly, when jumping from an inner position to an outer position, the above procedure can be performed from the outer position in the same manner.

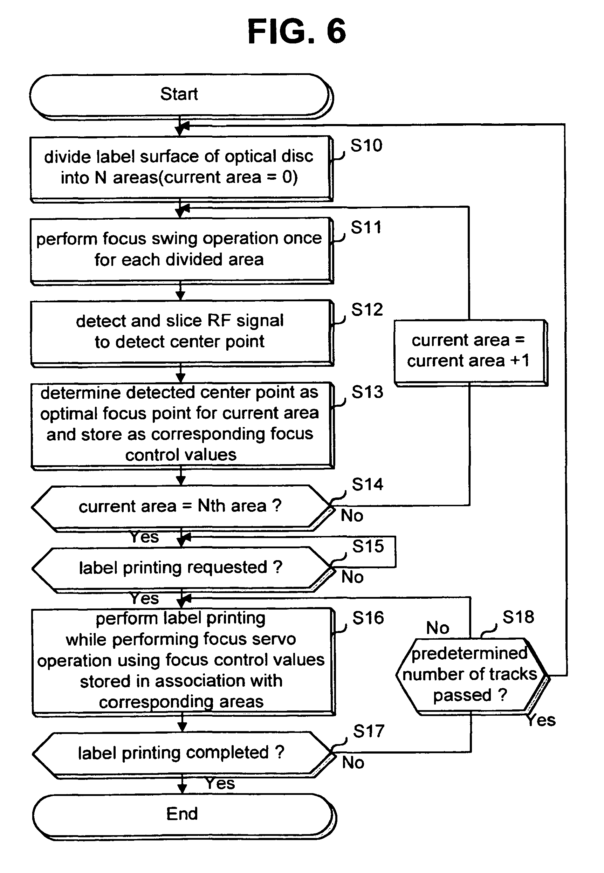

Fig. 6 is a flow chart of a focus servo control method of an optical disc device in accordance with an embodiment of the invention. If a disc such as, for example, a LightScribe disc, is loaded in the device with the label surface facing down so that the label surface faces the optical pickup 11, the microcomputer 16 divides the surface radially into N areas (S10). For example, the label surface of the optical disc is divided radially into 20 areas (Area 0 to Area 19) arranged as shown in Fig. 7, and respective optimal focus points of the radially divided areas are detected, so that feed-forward focus servo control can compensate for surface vibration components present on the label surface based on the detected optimal focus points. If the label surface is divided radially into a plurality of areas, the first divided area starts at the first spoke (Spoke 0) positioned at the end of the index mark, the first spoke (Spoke 0) providing a circumferential reference point on the label surface of the disc.

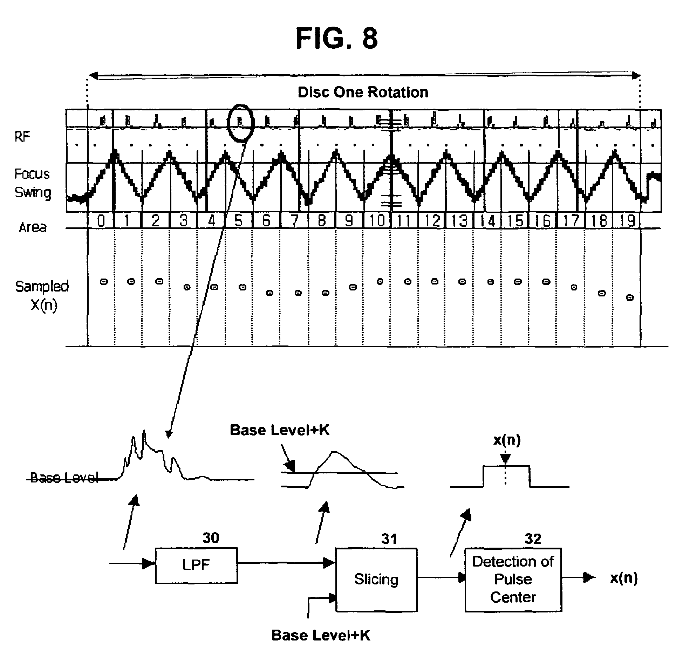

The microcomputer 16 then controls operation of the servo controller 18, causing the spindle motor 14 to rotate the optical disc 10 and the sled motor 15 to position the optical pickup 11 at a predetermined position in an inner section of the label surface. A focus swing operation which moves the objective lens 102 of the optical pickup 11 up and down is performed by the actuator 100 for each of the 20 areas as shown in Fig. 8 (S11).

During the focus swing operation, the microcomputer 16 detects center points of a detected RF signal as shown in Fig. 8. The RF signal may include effects due to variations encountered on the disc, such as, for example, high frequency components due to, for example, dust and impurities on the label surface and unevenness of the label surface. These high frequency components of the detected RF signal may be removed using, for example, a low pass filter (LPF) 30, a slice 31, and a pulse center detector 32. The RF signal may then be sliced into specific reference-level signals and respective center points of the sliced signals may be detected (S12).

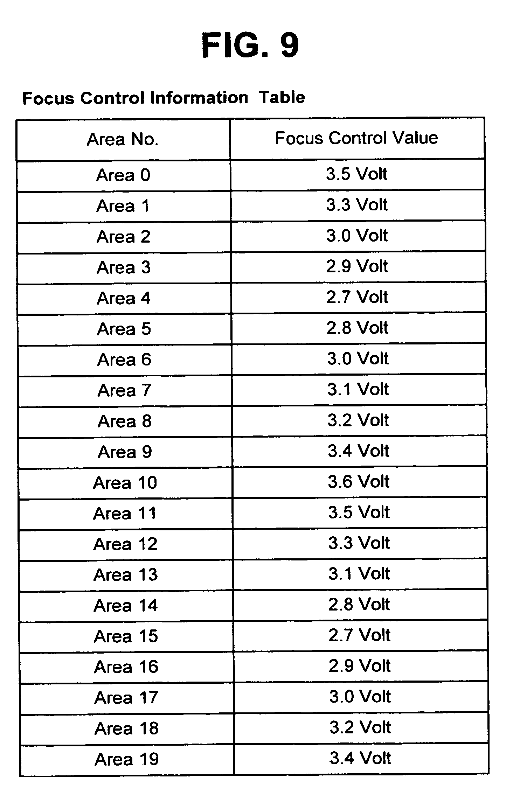

The detected center points are considered respective optimal focus points of the 20 areas, and corresponding focus control values determined when the respective optimal focus points are detected are stored in association with a corresponding area. For example, the memory 19 may receive respective optimal focus driving voltages associated with the 20 areas and store these voltages as the respective focus control values , or the memory 19 may receive respective focus offset voltages associated with the 20 areas and store these voltages as the respective focus control values (S13). A sample tabulation of areas and corresponding focus control values is shown in Fig. 9.

The microcomputer 16 performs this series of operations from the first to the last of the N radially divided areas (S14). In this example, these operations are performed on 20 radially divided areas. However, it would be well understood by those of ordinary skill in the art that other numbers of radially divided areas may also be appropriate. The microcomputer 16 may repeat the focus point detection operations for the N areas to detect more accurate focus points. The focus swing operation is completed when the respective optimal focus points of the N radially divided areas of the label surface have been detected and stored. The microcomputer 16 then confirms whether or not it has received a label print request (S15).

If label printing is requested (S15), the microcomputer 16 reads the focus control values stored in association with the corresponding areas, and confirms a current area on the label surface accessed by the optical pickup 11. The microcomputer 16 then drives the actuator 100 using a focus control value which corresponds to the confirmed current area to perform a label printing operation (S16). If the label printing operation is completed (S17), the microcomputer 16 may proceed to another operation.

If a predetermined outward radial distance is exceeded during the label printing operation, such as when, for example, a predetermined number of tracks have been passed (S18), the label printing operation is suspended and the above steps S10 to S14 are repeated to detect respective optimal focus points of a predetermined number of radially divided areas at the suspended position and store corresponding focus control values. The label printing operation is then carried out while performing feed-forward focus servo control using the stored focus control values. The above procedure is may be repeated periodically, such as, for example, every 32 tracks, to more accurately compensate for surface vibrations of the optical disc.

Similarly, if, after the label printing operation is completed, there is a need to resume the label printing operation in an area which is radially beyond the completed position, the optical pickup 11 may be moved and the above procedure may be repeated. More particularly, after moving to a position on the outer area, respective optimal focus points for a predetermined number of radially divided areas at the new position may be determined and then corresponding focus control values may be stored.

The invention may be applied not only to the label surface of an optical disc, but also to a data surface of an optical disc.

As is apparent from the above description, a focus servo control method in an optical disc device in accordance with embodiments of the invention performs focus servo control in a feed-forward fashion while also compensating for surface vibrations present on an optical disc, thereby making it possible to properly perform label printing regardless of any surface vibrations or unevenness on the optical disc.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A method of printing a label on recordable medium (10) including a data surface configured to receive and store data on a first side thereof, and a label surface configured to receive a label printed thereon on a second side opposite the first side, the method comprising:
- reading a first pattern from the recordable medium (10) to determine if the recordable medium (10) includes both a data surface on a first side thereof and a label surface on a second side opposite the first side thereof, wherein the first pattern is read by a spoke detector (22) and comprises a plurality of spokes provided proximate an inner circumference of a recordable medium (10);
- determining if a surface of the recordable medium (10) facing an optical pickup device (11) corresponds to the data surface or the label surface of the recordable medium (10) based on a reflection of optical light from the surface of the recordable medium (10) facing the optical pickup (11); and
- synchronizing operation of the optical pickup device (11) with a reference position delineated by the first pattern if it is determined that the surface of the recordable medium (10) facing the optical pickup device is the label surface (11)
- dividing the label surface into a plurality of radial areas;
- determining a plurality of first optimum focus points each corresponding to a respective area of the plurality of areas;
- performing a label printing operation to print an image on the label surface of the recordable medium (10) based on the plurality of first optimum focus points;
- suspending the label printing operation if the optical pickup (11) exceeds a first predetermined outward radial distance; and
- determining a plurality of second optimum focus points each corresponding to a respective area of the plurality of areas, and resuming the printing operation on the label surface of the recordable medium (10) based on the plurality of second optimum focus points,
wherein resuming the printing operation comprises beginning substantially at the first predetermined outward radial distance at which the printing operation was suspended, and sustaining the resumed printing operation for a second predetermined outward radial distance.

2. The method of claim 1, wherein synchronizing operation of the optical pickup device (11) with a reference position delineated by the first pattern comprises synchronizing operation of the optical pickup device (11) with a spoke of the plurality of spokes which corresponds to a zero position on the inner circumference of the recordable medium (10).

3. The method of claim 1, wherein the first predetermined outward radial distance is approximately 32 tracks.

4. The method of claim 1, wherein the second predetermined outward radial distance is approximately 32 tracks.

5. The method of claim 1, wherein synchronizing operation of the optical pickup device (11) with a reference position delineated by the first pattern comprises controlling a speed of rotation of the recordable medium (10).

6. The method of claim 1, wherein performing a label printing operation to print an image on the label surface of the recordable medium (10) based on the plurality of first optimum focus points comprises performing focus servo control based on the plurality of first optimum focus points.

7. The method of claim 6, wherein the focus servo control is performed in a feed-forward manner.

8. The method of claim 1, wherein determining a plurality of first optimum focus points each corresponding to a respective area of the plurality of areas comprises:
- positioning a focus actuator (100) in each of the plurality of areas to detect a respective RF signal in each of the plurality of areas; and
- determining a corresponding center point for each of the respective RF signals detected to determine corresponding focus control information used to perform the label printing operation.

9. The method of claim 8, wherein the corresponding focus control information comprises a driving voltage or an offset voltage.

10. The method of one of the preceding claims, wherein the recordable medium (10) is an optical disk having a non-data side specially prepared for burning or etching an image thereon by a laser.

## Patentansprüche

1. Verfahren zum Drucken einer Kennzeichnung auf einem Aufzeichnungsmedium (10), mit einer Datenoberfläche, die zur Aufnahme und Speicherung von Daten auf der ersten Seite davon ausgestaltet ist, und mit einer Kennzeichnungsoberfläche, die zur Aufnahme einer darauf gedruckten Kennzeichnung auf einer der ersten Seite entgegengesetzten zweiten Seite ausgestaltet ist, wobei das Verfahren die folgenden Schritte umfasst:
- Lesen eines ersten Musters von dem Aufzeichnungsmedium (10), um zu bestimmen, ob das Aufzeichnungsmedium (10) sowohl eine Datenoberfläche auf einer ersten Seite davon als auch eine Kennzeichnungsoberfläche auf einer der ersten Seite davon entgegengesetzten zweiten Seite umfasst, wobei das erste Muster durch einen Speichendetektor (22) gelesen wird und eine Vielzahl von Speichen umfasst, die nahe eines inneren Umfangs eines Aufzeichnungsmediums (10) vorgesehen sind;
- Bestimmen, ob eine Oberfläche des Aufzeichnungsmediums (10), welche einer optischen Abnehmervorrichtung (11) gegenüberliegt, der Datenoberfläche oder der Kennzeichnungsoberfläche des Aufzeichnungsmediums (10) basierend auf einer Reflexion des optischen Lichts von der dem optischen Abnehmer (11) gegenüberliegenden Oberfläche des Aufzeichnungsmediums (10) entspricht;
- Synchronisieren des Betriebs der optischen Abnehmervorrichtung (11) mit einer Referenzposition, die durch das erste Muster abgegrenzt ist, wenn bestimmt wird, dass die der optischen Abnehmervorrichtung gegenüberliegende Oberfläche des Aufzeichnungsmediums (10) die Kennzeichnungsoberfläche (11) ist;
- Aufteilen der Kennzeichnungsoberfläche in eine Vielzahl von radialen Bereichen;
- Bestimmen einer Vielzahl von ersten optimalen Fokuspunkten, die jeweils einem entsprechenden Bereich der Vielzahl von Bereichen entsprechen;
- Durchführen eines Kennzeichnungsdruckbetriebs, um ein Bild auf der Kennzeichnungsoberfläche des Aufzeichnungsmediums (10) basierend auf der Vielzahl von ersten optimalen Fokuspunkten zu drucken;
- Unterbrechen des Kennzeichnungsdruckbetriebs, wenn der optische Abnehmer (11) einen ersten vorbestimmten äußeren radialen Abstand überschreitet; und
- Bestimmen einer Vielzahl von zweiten optimalen Fokuspunkten, die jeweils einem entsprechenden Bereich der Vielzahl von Bereichen entspricht, und Wiederaufnehmen des Druckbetriebs auf der Kennzeichnungsoberfläche des Aufzeichnungsmediums (10) basierend auf der Vielzahl von zweiten optimalen Fokuspunkten,
wobei das Wiederaufnehmen des Druckbetriebs das Anfangen im Wesentlichen bei dem ersten vorbestimmten äußeren radialen Abstand, bei welchem der Druckbetrieb unterbrochen wurde, und das Aufrechterhalten des wiederaufgenommenen Druckbetriebs bis zu einem zweiten vorbestimmten äußeren radialen Abstand umfasst.

2. Verfahren nach Anspruch 1, wobei das Synchronisieren des Betriebs der optischen Abnehmervorrichtung (11) mit einer Referenzposition, die durch das erste Muster abgegrenzt ist, das Synchronisieren des Betriebs der optischen Abnehmervorrichtung (11) mit einer Speiche der Vielzahl von Speichen umfasst, welche einer Nullposition an dem inneren Umfang des Aufzeichnungsmediums (10) entspricht.

3. Verfahren nach Anspruch 1, wobei der erste vorbestimmte äußere radiale Abstand etwa 32 Spuren entspricht.

4. Verfahren nach Anspruch 1, wobei der zweite vorbestimmte äußere radiale Abstand ungefähr 32 Spuren entspricht.

5. Verfahren nach Anspruch 1, wobei das Synchronisieren des Betriebs der optischen Abnehmervorrichtung (11) mit einer Referenzposition, die durch das erste Muster abgegrenzt ist, das Steuern einer Drehgeschwindigkeit des Aufzeichnungsmediums (10) umfasst.

6. Verfahren nach Anspruch 1, wobei das Durchführen eines Kennzeichnungsdruckbetriebs zum Drucken eines Bildes auf der Kennzeichnungsoberfläche des Auszeichnungsmediums (10) basierend auf der Vielzahl von ersten optimalen Fokuspunkten das Durchführen einer Fokus-Servo-Steuerung basierend auf der Vielzahl von ersten optimalen Fokuspunkten umfasst.

7. Verfahren nach Anspruch 6, wobei die Fokus-Servo-Steuerung in einer Vorwärtsregelungsweise durchgeführt wird.

8. Verfahren nach Anspruch 1, wobei das Bestimmen einer Vielzahl von ersten optimalen Fokuspunkten, die jeweils einem entsprechenden Bereich der Vielzahl von Bereichen entsprechen, folgendes umfasst:
- Positionieren eines Fokusaktuators (100) in jedem der Vielzahl von Bereichen, um ein entsprechendes RF-Signal in jedem der Vielzahl von Bereichen zu messen; und
- Bestimmen eines entsprechenden Mittelpunkts für jedes der entsprechenden gemessenen RF-Signale, um eine entsprechende Fokus-Steuerungsinformation zu bestimmen, die verwendet wird, um den Kennzeichnungsdruckbetrieb durchzuführen.

9. Verfahren nach Anspruch 8, wobei die entsprechende Fokus-Steuerungsinformation eine Antriebsspannung oder eine Offset-Spannung umfasst.

10. Verfahren nach einem der vorstehenden Ansprüche, wobei das Aufzeichnungsmedium (10) eine optische Platte mit einer datenfreien Seite ist, die speziell zum Brennen oder Ätzen eines Bildes darauf durch einen Laser präpariert ist.

## Revendications

1. Procédé pour imprimer une étiquette sur un support enregistrable (10), qui inclut une surface de données configurée pour recevoir et stocker des données sur un premier côté du support, et une surface à étiquette configurée pour recevoir une étiquette imprimée sur elle-même sur un second côté opposé au premier côté, le procédé comprenant :
- la lecture d'un premier motif à partir du support enregistrable (10) pour déterminer si le support enregistrable (10) inclut à la fois une surface de données sur un premier côté et une surface à étiquette sur un second côté à l'opposé du premier côté, dans lequel le premier motif est lu par un détecteur de rayons (22) et comprend une pluralité de rayons prévus à proximité d'une circonférence intérieure d'un support enregistrable (10) ;
- la détermination de savoir si une surface du support enregistrable (10) qui fait face vers une tête optique (11) correspond à la surface de données ou à la surface à étiquette du support enregistrable (10) en se basant sur la réflexion de la lumière optique provenant de la surface du support enregistrable (10) en face de la tête optique (11) ; et
- la synchronisation du fonctionnement de la tête optique (11) avec une position de référence délimitée par le premier motif si l'on détermine que la surface du support enregistrable (10) en face de la tête optique est la surface à étiquette (11) ;
- la division de la surface à étiquette en une pluralité de zones radiales ;
- la détermination d'une pluralité de premiers points de focalisation optimums, correspondant chacun à une zone respective de la pluralité de zones ;
- l'exécution d'une opération d'impression d'étiquette pour imprimer une image sur la surface à étiquette du support enregistrable (10) en se basant sur la pluralité de premiers points de focalisation optimums ;
- la suspension de l'opération d'impression d'étiquette si la tête optique (11) dépasse une première distance radiale prédéterminée vers l'extérieur ; et
- la détermination d'une pluralité de seconds points de focalisation optimums, correspondant chacun à une zone respective de la pluralité de zones, et la reprise de l'opération d'impression sur la surface à étiquette du support enregistrable (10) en se basant sur la pluralité de seconds points de focalisation optimums,
dans lequel la reprise de l'opération d'impression comprend de commencer sensiblement à la première distance radiale prédéterminée vers l'extérieur à laquelle l'opération d'impression a été suspendue, et de poursuivre l'opération d'impression reprise jusqu'à une seconde distance radiale prédéterminée vers l'extérieur.

2. Procédé selon la revendication 1, dans lequel l'opération de synchronisation de la tête optique (11) avec une position de référence délimitée par le premier motif comprend une opération de synchronisation de la tête optique (11) avec un rayon de la pluralité de rayons qui correspond à une position zéro sur la circonférence intérieure du support enregistrable (10).

3. Procédé selon la revendication 1, dans lequel la première distance radiale prédéterminée vers l'extérieur est approximativement 32 pistes.

4. Procédé selon la revendication 1, dans lequel la seconde distance radiale prédéterminée vers l'extérieur est approximativement 32 pistes.

5. Procédé selon la revendication 1, dans lequel l'opération de synchronisation de la tête optique (11) avec une position de référence délimitée par le premier motif comprend de commander une vitesse de rotation du support enregistrable (10).

6. Procédé selon la revendication 1, dans lequel l'exécution d'une opération d'impression d'étiquette pour imprimer une image sur la surface à étiquette du support enregistrable (10) en se basant sur la pluralité de premiers points de focalisation optimums comprend d'exécuter une commande asservie de focalisation en se basant sur la pluralité de premiers points de focalisation optimums.

7. Procédé selon la revendication 6, dans lequel la commande asservie de focalisation est exécutée d'une manière prédictive ("feed-forward").

8. Procédé selon la revendication 1, dans lequel la détermination d'une pluralité de premiers points de focalisation optimums qui correspondent chacun à une zone respective de la pluralité de zones comprend :
- le positionnement d'un actionneur de focalisation (100) dans chacune de la pluralité de zones pour détecter un signal à radiofréquences respectif dans chacune de la pluralité de zones ; et
- la détermination d'un point central correspondant pour chacun des signaux à radiofréquences respectif détecté pour déterminer les informatisons de commande de focalisation correspondantes utilisées pour exécuter l'opération d'impression d'étiquette.

9. Procédé selon la revendication 8, dans lequel les informations de commande de focalisation correspondante comprennent une tension d'entraînement ou une tension de décalage.

10. Procédé selon l'une des revendications précédentes, dans lequel le support enregistrable (10) est un disque optique ayant un côté qui n'est pas destiné aux données et qui est spécialement préparé pour écrire ou graver une image sur celui-ci au moyen d'un laser.
